# EUROPEAN PATENT SPECIFICATION

(11) **EP 2 493 085 B1**
(45) Date of publication and mention of the grant of the patent: **29.04.2020**
(21) Application number: 12001146.5
(22) Date of filing: 21.02.2012
(51) Int. Cl.: H04B 3/54

(54) **Coexistence in communication system**
Koexistenz in Kommunikationssystem
Coexistence dans un système de communication

(30) Priority: 22.02.2011 US 201161445523 P
(43) Date of publication of application: 29.08.2012
(73) Proprietor: Lantiq Beteiligungs-GmbH & Co. KG, 85579 Neubiberg (DE)
(72) Inventor: Oksman, Vladimir, Morganville NJ 07751 (US); Kim, Joon Bae, Lexington MA 02420 (US)
(74) Representative: Kraus & Weisert Patentanwälte PartGmbB

(56) References cited:
- EP-A1- 1 220 509
- WO-A2-2011/022464
- US-A1- 2004 001 508
- US-A1- 2010 303 096
- US-B1- 7 274 652
- OKSMAN V ET AL: "G.hn: The new ITU-T home networking standard", IEEE COMMUNICATIONS MAGAZINE, IEEE SERVICE CENTER, PISCATAWAY, US, vol. 47, no. 10, 1 October 2009 (2009-10-01), pages 138-145, XP011283328, ISSN: 0163-6804, DOI: 10.1109/MCOM.2009.5273821

## Description

Power line Communication (PLC) is a communication technology that uses power lines as its communication medium. Data travels over the same power line that provides electricity, thus allowing the existing power line infrastructure in homes, businesses or cars to be used for the purpose of transporting data without adding new wires. PLC technology is experiencing a period of rapid growth and finding its way into multiple applications and market segments including smart grid, lighting control, solar panel monitoring, energy metering, in-home video distribution, and electric cars. The global push for energy conservation is driving the need for intelligently communicating with energy generation and energy consuming devices. PLC offers a unique no-new-infrastructure approach to enabling rapid deployment of smart energy management technology around the world. Unlike wireless solutions, PLC does not have limitations of line-of-sight and short transmission range. PLC is also a cost-effective and easy-to-install technology for many applications.

There are various PLC technologies offered today. Such technologies include those that operate above the 2 MHz frequency band (e.g., HomePlug and G.9960/9961 (G.hn)), and those that operate in the 9 - 500 kHz frequency range (e.g., LonWorks, KNX, G3, PRIME, and G.9955/G.9956 (G.hnem)). PLC technologies that operate in the same frequency band may interfere.

WO2011/022464 discloses a mechanism of coexistence between two different versions of a protocol for power line communications.

Due to its publication date, it forms part of the state of the art under Art. 54(3) EPC.

US 7,274,652 B1 discloses a dual packet configuration for wireless communications. A first portion is modulated according to a serial modulation and a second portion is modulated according to a parallel modulation.

US 2010/03159939 A1 discloses a method for a network device of a powerline communications network. The method includes selecting between a default preamble signal and a network-specific preamble signal. The network-specific preamble signal is specific to the network, but not to a neighbouring network. The method includes transmitting user data in conjunction with the selected preamble signal.

The independent claims define the invention in various aspects. The dependent claims define embodiments according to the invention in the various aspects.

In a first aspect, the invention encompasses a method, comprising generating, at a communication node, a frame. Herein, a frame is also synonymously called a packet. The frame includes a header generated based on a first protocol type and a payload generated based on a second protocol type. The method further comprises transmitting the frame. In one implementation, the frame is transmitted to a receiving node. At least one effect of the invention in the first aspect Is that nodes operating according to different standards are seamlessly able to communicate. In particular, a node operating according to a first standard produces a frame that includes a header generated based on a first protocol type and a payload generated based on a second protocol type. Nodes operating according to a second standard, which is compatible with the second protocol type, will be able to demodulate the payload generated based on the second protocol type.

In an embodiment according to the invention in the first aspect the header includes at least a Frame Control Header (FCH) generated based on the first protocol type.

In an embodiment according to the invention in the first aspect the frame comprises at least a preamble. In an embodiment the preamble is generated based on the first protocol type.

In an embodiment according to the invention in the first aspect the frame comprises another header. In an embodiment the another header is generated based on the second protocol type. In an embodiment according to the invention in the first aspect the another header includes at least a Frame Control Header (FCH) generated based on the second protocol type. In an embodiment according to the invention in the first aspect one or more symbols are disposed between the header and the another header. In an embodiment according to the invention in the first aspect the header Includes a bit usable to determine that the frame includes payload that may be demodulated by a node operating according to the second protocol type.

In an embodiment according to the invention in the first aspect the first protocol type is according to standard G.hnem and the second protocol type is according to standard G3.

In a second aspect, the invention encompasses a node comprising a controller and a storage memory coupled to the controller. The storage medium includes instructions to generate at least one communication for communication on a communication network medium when executed by the controller. The at least one communication includes a first header generated based on a first protocol type. In an embodiment, the at least one communication further includes a second header generated based on a second protocol type. In an embodiment according to the invention in the second aspect the node is adapted to perform the method according to the invention in the first aspect. At least one effect of the invention in the second aspect is that nodes operating according to different standards are seamlessly able to communicate. In particular, a node operating according to a first standard produces a frame that includes a header generated based on a first protocol type and a second header generated based on a second protocol type. Nodes operating according to a second standard, which is compatible with the second protocol type, will be able to process the frame in view of the second header generated based on the second protocol type.

In a third aspect, the invention encompasses a system comprising a communication network medium and at least one node coupled to the medium. The node is arranged to communicate, at least in part via the medium, a frame that includes a header generated based on a first protocol type and a payload generated based on a second protocol type. At least one effect of the invention in the third aspect is that nodes operating according to different standards are seamlessly able to communicate. In particular, a node operating according to a first standard produces a frame that includes a header generated based on a first protocol type and a payload generated based on a second protocol type. Nodes operating according to a second standard, which is compatible with the second protocol type, will be able to demodulate the payload generated based on the second protocol type.

In an embodiment according to the invention In the third aspect the communication network medium comprises a network of electrical power distribution conductors.

In an embodiment according to the invention in the third aspect the node is provided according to the invention in the second aspect. An embodiment according to the invention In the third aspect is adapted to perform the method according to the invention in the first aspect.

Below, the detailed description is set forth with reference to the accompanying figures. In the figures, the left-most digit(s) of a reference number identifies the figure in which the reference number first appears. The use of the same reference numbers in different figures indicates similar or identical items.
- FIG. 1: is schematic of an example network or system in which the techniques in accordance with the present disclosure may be implemented.
- FIG.2: is a block diagram illustrating one example of a node implemented as part of the network of FIG. 1.
- FIG. 3: is a schematic of an example communication block.
- FIG.4: is a schematic of an example communication block, according to an implementation.
- FIG. 5: illustrates a representative process for generating a communication at a node that includes supplemental information that predetermined header information.

### DETAILED DESCRIPTION

### Overview

Representative implementations of devices and techniques enable reliable communication between networked nodes operating on a communication network medium. In an implementation, a node, such as a controller or master node, generates a data packet that includes at least a preamble, a first header, a second header and a payload. In one implementation, each header includes a Frame Control Header (FCH) that may include frame configuration information, such as the usable subchannels, the modulation and coding scheme, and the Media Access Protocol (MAP) message length for the current frame. The FCH of the first header is generated according to a first protocol type, and the FCH of the second header is generated according to a second protocol type. The payload is generated according to the second protocol type. A data packet formatted as such enables a receiving node, which is operating according to the second protocol type, to receive the data packet from a node operating according to the first protocol type.

Various implementations, Including techniques and devices, are discussed with reference to the figures. The techniques and devices discussed may be applied to any of various network designs, circuits, and devices and remain within the scope of the disclosure.

Implementations are explained in more detail below using a plurality of examples. Although various implementations and examples are discussed here and below, further implementations and examples may be possible by combining the features and elements of individual implementations and examples.

### Example Communication System

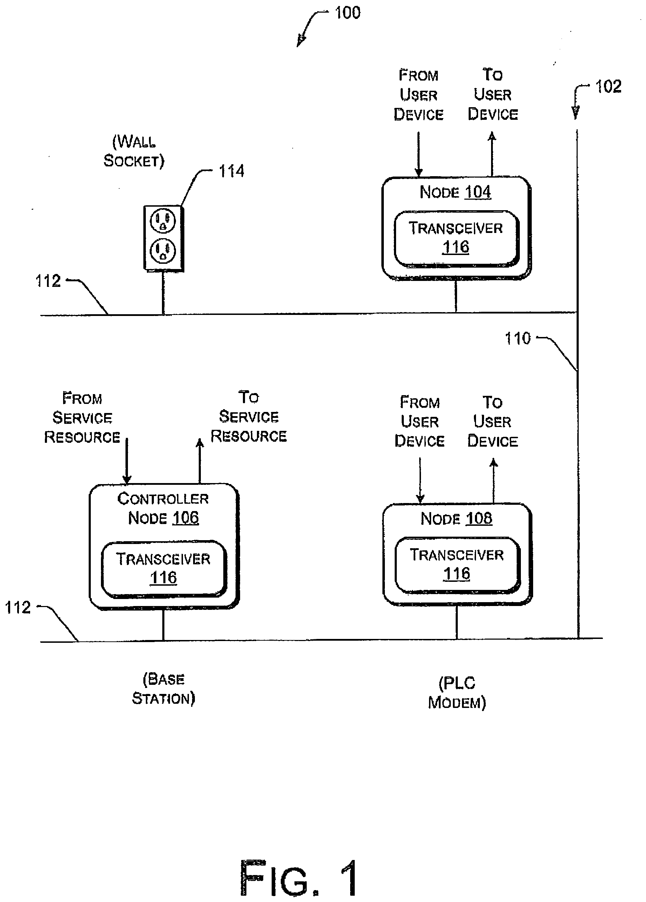

In one implementation, as shown in FIG. 1, a system 100 comprises a communication network medium 102 shared by at least two nodes (e.g., nodes 104, 106, and 108) coupled to the medium 102. The nodes 104-108 are arranged to communicate at least in part via the medium 102. In one Implementation, the system 100 is a multicarrier arrangement or system. In various alternate implementations, the system 100 based on the communication network medium 102 comprises a single communication channel and the nodes 104-108 represent discrete homogeneous networks communicatively coupled to the single communication channel.

The medium 102 may be comprised of a trunk or feeder 110 and one or more branches 112, In one example, the system 100 is a power line communication (PLC) system, In that case, the trunk 110 and branches 112 are electrical power distribution conductors (e.g., power lines) arranged to distribute electric power to one or more end user locations (e.g., within residences, commercial or professional suites, industrial sites, etc.). In the example, nodes 104-108 are coupled to the electric power lines and arranged to communicate at least in part via the electrical power lines. While the disclosure, including the figures and the discussion herein, discuss the techniques and devices disclosed in terms of a PLC system, the techniques and devices may be used for enabling network coexistence for other types of networks (e.g., wired and/or wireless, optical, etc.) without departing from the scope of the disclosure. For example, the medium 102 may be realized as a wireless communication medium, a wire line communication medium (e.g., coaxial cable, twisted pair of copper wires, power line wiring, optical fiber, etc.), or as combinations thereof.

As shown in FIG. 1, nodes 104-108 may be coupled to the medium 102 via one or more power outlets 114. For example, a node (104-108) may be "plugged in" to a wall socket (power outlet 114). Alternately, nodes 104-108 may be hardwired to the medium 102, or may be coupled in another manner allowing communication via the medium 102 (e.g., inductive coupling, optical coupling, wireless coupling, etc.).

As shown In FIG. 1, nodes 104-108 may also have connection to and/or from user devices, service resources, and the like. For example, a node (104-108) may be communicatively coupled to a user communications device, an automation console, a surveillance hub, a power usage monitoring and/or control interface, a service provider feed, a utility connection, and so forth. In one implementation, one or more of the nodes 104-108 is a controller node 106 (e.g., base station, master node, etc.) arranged to control communication of information with regard to the network. For example, a controller node 106 may receive an entertainment feed from a service provider, and distribute content to other nodes on the network (such as nodes 104 and 108) as well as optionally provide for content consumption at the controller node 106 itself. In one case, the controller node 106 may control the type of content that is distributed to the other nodes 104 and 108, control the bandwidth used by the other nodes 104 and 108, and/or provide other control functions.

In one implementation, one or more of the nodes 104-108 may include a multicarrier apparatus, transmitter, receiver, transceiver, modem, or the like, (generically referred to herein as a "transceiver 116") for communication via the network. Accordingly, the nodes 104-108 may include structure and functionality that enable signal communication over the medium 102. Such structure and functionality may include one or more antennas, integrated wire line interfaces, and the like. Depending on the implementation, the nodes 104-108 may communicate with one another directly (peer-to-peer mode) or the nodes 104-108 may communicate via the controller node 106. In one implementation, the nodes 104-108 are Orthogonal Frequency Division Multiplexing (OFDM) apparatuses capable of implementing the herein described implementations. For example, the nodes 104-108 may include a transceiver and/or a controller, as is discussed below.

In one implementation, system 100 may be a home network and one or more of the nodes 104-108 may be an access point of the home network. For example, in the implementation the controller node 106 may be a residential gateway that distributes broadband services to the other nodes (e.g., nodes 104 and 108). The nodes 104-108 may be associated with digital content destinations in the home, but may also be associated with digital content sources, such as digital video recorders (DVR), computers providing streaming video, televisions, entertainment centers, and the like.

Furthermore, the nodes 104-108 may be enabled to communicate using packet-based technology (e.g., ITU G.hn, HomePNA, HomePlug® AV and Multimedia over Coax Alliance (MoCA)), LonWorks, KNX, G3, PRIME, and G.9955/G.9956 (G.hnem) and xDSL technology). Such xDSL technology may include Asymmetric Digital Subscriber Line (ADSL), ADSL2, ADSL2+, Very high speed DSL (VDSL), VDSL2, G.Lite, and High bit rate Digital Subscriber Line (HDSL). In addition, the nodes 104-108 may be enabled to communicate using IEEE 802.11 and IEEE 802.16 (WIMAX) wireless technologies.

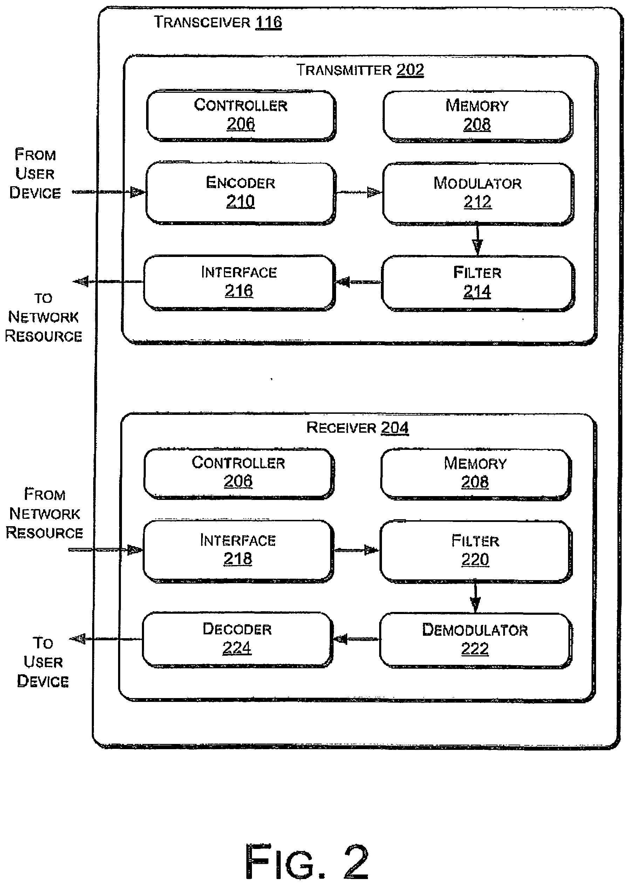

In the example of FIG. 1, each of the nodes is shown having a transceiver 116. An example transceiver 116 is illustrated in FIG. 2. The transceiver 116 may include a transmitter portion 202 and/or a receiver portion 204, where one or both of the portions may include a controller 206 and/or memory 208. In various implementations, a single controller 206 may be shared by the transmitter 202 and the receiver 204. Likewise, in some implementations, a single memory 208 may be shared by the transmitter 202 and the receiver 204, or alternately the memory 208 may be comprised of multiple memory devices distributed in one or more of the transceiver 118, the transmitter 202, and the receiver 204.

As used herein, the term "controller 206" is meant generally to include all types of digital processing devices including, without limitation, digital signal processors (DSPs), reduced instruction set computers (RISC), general-purpose (CISC) processors, microprocessors, gate arrays (e.g., FPGAs), programmable logic devices (PLDs), reconfigurable compute fabrics (RCFs), array processors, secure microprocessors, and application-specific integrated circuits (ASICs). Such digital processors may be contained on a single unitary IC die, or distributed across multiple components. If included, the controller 206 may direct the flow of information through the transceiver 116, may provide timing to the components of the transceiver 116, may determine MAC cycle synchronization or alignment.

If included, the memory 208 may store executable instructions, software, firmware, operating systems, applications, preselected values and constants, and the like, to be executed or used by the controller 206, for example. In various implementations, the memory 208 may include computer-readable media. Computer-readable media may include, for example, computer storage media. Computer storage media, such as memory 208, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device (such as the controller 206). Although the computer storage media (memory 208) is shown within the transceiver 116 it will be appreciated that the memory 208 may be distributed or located remotely and accessed via a network or other communication link.

As shown in FIG. 2, an example transmitter 202 may include an encoder 210, a modulator 212, a filter 216, and an interface 214. In alternate implementations, a transmitter 202 may include fewer components, alternate components, or additional components and remain within the scope of the disclosure.

In an implementation, signals exchanged between the nodes 104-108 may include multicarrier symbols that each includes a plurality of tones or sub-channels. Each of the tones within a multicarrier symbol may have data bits modulated thereon that are intended for delivery from one of the nodes 104-108 to another. In an implementation, the transmitter 202 is arranged to modulate the data bits onto the tones and transmit the signals including the tones via the medium 102.

If included, the encoder 210 is arranged to receive data (e.g., from a user device) for communication to a receiving device coupled to the transceiver 116 via a wireless or wire line medium 102. More specifically, the encoder 210 is arranged to translate incoming data bit streams into in-phase and quadrature components for the plurality of tones. The encoder 210 may be arranged to output a number of symbol sequences that are equal to the number of tones available to the system 100.

If included, the modulator 212 is arranged to receive symbol sequences (e.g., from the encoder 210) to produce a modulated signal In the form of a discrete multi-tone signal. The modulator may pass the modulated signal to the filter 214 (if the filter is included) to undergo various filtering. In one implementation, the filtered signal is passed to the interface 216 for communication over the medium 102 to a receiving device. For example, the interface 216 may facilitate communication of the modulated signal to a network resource such as an automation control center, a surveillance hub, and the like.

In various implementations, the transceiver 116 may also include a receiver 204 that is capable of receiving modulated multi-tone signals communicated over the medium 102 from a transmitting device. As shown in FIG. 2, an example receiver 204 may Include an interface 218, a filter 220, a demodulator 222, and a decoder 224. In alternate implementations, a receiver 204 may include fewer components, alternate components, or additional components and remain within the scope of the disclosure.

In one implementation, signals received by the receiver 204 may be passed to the filter 220 via the interface 218. The interface 218 may facilitate communication with a network resource, for example. After received signals undergo filtering by way of the filter 220 (if included), the filtered signals may be demodulated by the demodulator 222. The demodulated signals may be passed to and processed by the decoder 224.

If included, the decoder 224 produces data bit streams for consumption by a computing device, or the like. Effectively, the demodulator 222 and the decoder 224 perform the opposite functions of the modulator 212 and the encoder 210, respectively.

In various implementations, one or more of the controller 206, encoder 210, decoder 224, modulator 212, demodulator 222, interface 216 and/or 218, filter 214 and/or 220, as well other components, may be implemented in hardware, firmware, software, or the like, or in combinations thereof.

Exemplary implementations discussed herein may have various components collocated; however, it is to be appreciated that the various components of the system 100 may be located at distant portions of a distributed network, such as a communications network and/or the Internet, or within a dedicated secure, unsecured and/or encrypted arrangement. Thus, it should be appreciated that the components of the system 100 may be combined into one or more apparatuses, such as a modem, or collocated on a particular node of a distributed network, such as a telecommunications network. Moreover, it should be understood that the components of the described system 100 may be arranged at any location within a distributed network without affecting the operation of the system 100. For example, the various components can be located in a Central Office modem (CO, ATU-C, VTU-O), a Customer Premises modem (CPE, ATU-R, VTU-R), an xDSL management device, or some combination thereof. Similarly, one or more functional portions of the system 100 may be distributed between a modem and an associated computing device.

### Example Operations

Successful communications in communication networks (e.g., ITU-T G.9960/G.9961, IEEE 1901 FFT, IEEE 1901 Wavelet, LonWorks, KNX, G3, PRIME, and G.9955/G.9956 (G.hnem), etc.) using a communication medium (such as medium 102, for example) generally requires the detection and proper demodultion of communicated packets of information.

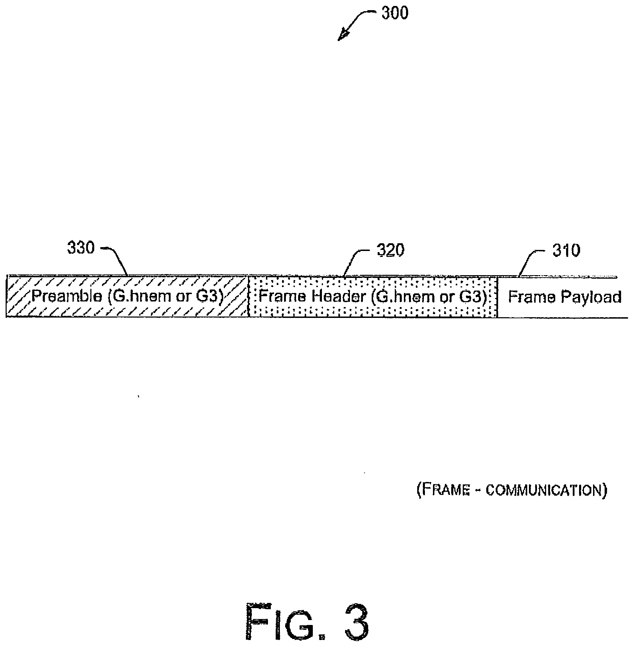

FIG. 3 illustrates a relevant portion of a typical data packet 300 used in an OFDM-based system. The data packet 300 includes a frame that includes its payload 310 with a header 320. A preamble 330 is prepended to or associated with the frame. The data packet 300 may also herein be referred to as a frame. The preamble 330 is the first part of the frame, and intended so that the receiver can detect the presence of the frame on the medium, adjust the gain of Analog Front End (AFE), and synchronize the clock. The header 320 carries necessary information for the receiver to address, demodulate, and decode the payload 310. Conveying the typical data packet 300 to a receiving node and expecting that node to demodulate the packet 300 are trivial assuming the transmitting and receiving nodes are implemented using a common technology. That is, for example, when both nodes are G.hnem nodes, G3 nodes, etc. However, in the case where the transmitting node and the receiving nodes implement technology according to unique standards (e.g., transmitting node G.hnem and receiving node G3), it is likely that a data packet transmitted by the transmitting node will not be properly demodulated by the receiving node.

The preamble 330 and header portion 320 serves at least to alert all nodes to receive the communication 300 that the communication 300 is arriving on the medium 102. The preamble 330 and header portion 320 may include a known sequence of 1's and 0's that allows time for one or more of the nodes 104-108 to detect the communication 300 and enter a state to receive data. The preamble 330 and header portion 320 may also convey the length (in µsec) of the payload portion 310, or the length individual payload sections of the payload portion 310. Furthermore, the preamble 330 and header portion 320 may include an FCH. Generally, the FCH is included In the header. The FCH may include frame configuration information, such as the usable subchannels, the modulation and coding scheme, and the MAP message length for the current frame, and for a subsequent frame generated and communicated on communication network medium 102.

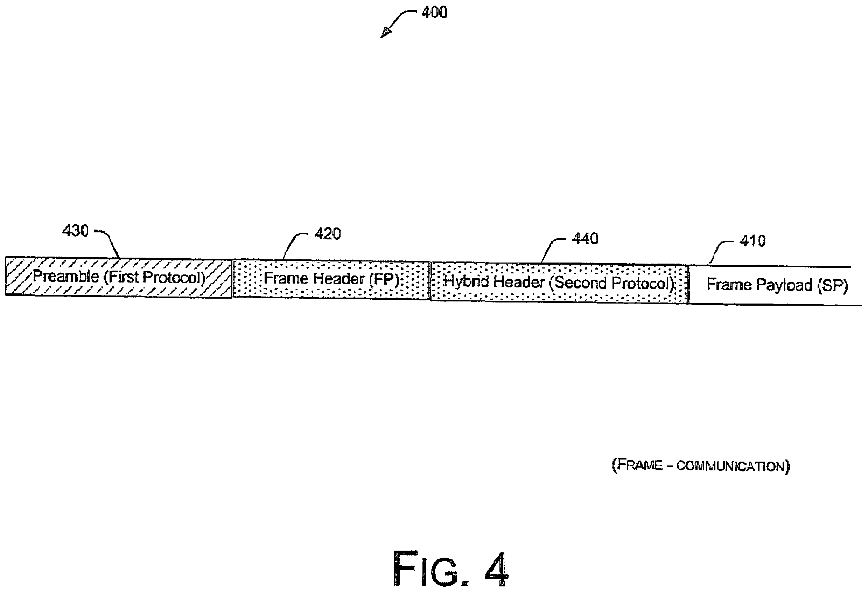

FIG. 4 is a schematic of an example communication 400, according to an Implementation. The data packet 400 includes a frame that Includes Its payload 410 with a header 420. The data packet 400 may also herein be referred to as a frame. A preamble 430 is prepended to or associated with the frame, The preamble 430 is generally the first part of the frame, and intended so that the receiver can detect the presence of the frame on the medium, adjust the gain of Analog Front End (AFE), and synchronize the clock. The example communication 400 also uses an additional header 440, which is referred to herein as a hybrid header. The example communication 400 is designed to enable one or more nodes that are implemented with unique technology to communicate.

To that end, the preamble 430 is generated in accordance with a transmitting node operating according to a first protocol (FP) type (e.g., G3). The frame header 420 is generated by the transmitting node In accordance with the FP type. However, the hybrid header 440 is generated by the transmitting node in accordance with a second protocol (SP) type (e.g., Ghnem). Similarly, the payload 410 is generated by the transmitting node in according with the SP type. Therefore, the PLC system 100 transmits the preamble and the header generated based on a FP type, and also includes a hybrid header and payload generated based on a SP type. The hybrid header 440 and payload 410 are generated according to the SP type so that a receiving node that implements technology according to the SP type is able to demodulate the data packet that was generated by a transmitting node that implements technology according to the FP type. Therefore, nodes implemented according to diverse standards may coexist, operate and receive data on a common communication network medium.

In an exemplary implementation, the frame header 420 includes an FCH generated based on the FP type and the hybrid frame header 440 includes an FCH generated based on the SP type. In one example, the FCH generated based on the SP type may be truncated to take advantage of redundant information common between the FCH generated based on the FP type and the FCH of the SP type. In another exemplary implementation, one header and one FCH are included in the example communication 400. This is possible when the transmitting node and the receiving node, although functioning based on two diverse standards, share a common FCH type. In another exemplary implementation, the frame header 420, generated by the transmitting node in accordance with the FP type, may include an indication bit that identifies that the payload 410 is for demodulation by a receiving node operating in accordance with the SP type. The indication bit may be provided by one of reserve bits associated with the FCH. In another exemplary implementation, one or more symbols may be placed between the header 420 and the hybrid header 440. These one or more symbols may serve to indicate the beginning of a portion of the data packet 400 associated with the SP type.

In alternate implementations, one or more of the above techniques may be employed concurrently, or another technique may be used to accomplish the same or similar results. The implementations herein are described in terms of exemplary embodiments. However, it should be appreciated that individual aspects of the implantations may be separately claimed and one or more of the features of the various embodiments may be combined.

### Representative Processes

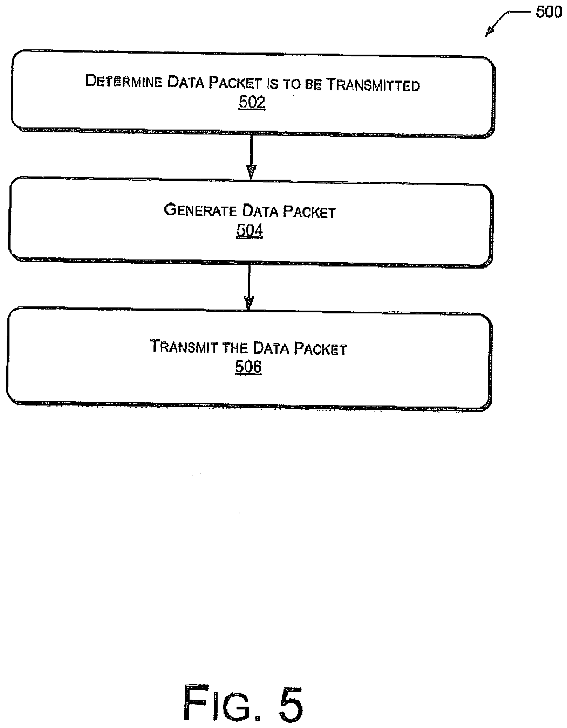

FIG. 5 illustrates a representative process 500 for generating a communication (e.g., communication 400) at a node (e.g., nodes 104-108) that includes preamble, header and payload that may be demodulated by a node that operates according to a standard that is different than a node that generated the communication. The described techniques may also be used with domains, networks, and the like. An example process 500 may be performed on a system 100, for example, where a common network communication medium 102 is shared. However, other communication media may also be used with the representative process 500. In one example, the communication network medium 102 comprises a single communication channel and at least two nodes (such as one or more of the nodes 104-108) representing discrete homogeneous networks are communicatively coupled to the single communication channel. The process 500 may refer to FIGS. 1-4.

At block 502, a node (such as nodes 104-108) determines that a data packet is to be transmitted. The determination to transmit a data packet may be based on a plurality of factors. Typical factors may include facilitating discovery, initiating network maintenance, providing route discovery, conveying information, etc. In one example, the data packet may be a communication 400.

At block 504, the node generates the data packet. The data packet includes a preamble, header, and payload. The preamble is generated in accordance with a transmitting node operating according to a first protocol (FP) type (e.g., G3). The frame header is generated by the transmitting node in accordance with the FP type. However, the hybrid header is generated by the transmitting node in accordance with a second protocol (SP) type (e.g., Ghnem). Similarly, the payload is generated by the transmitting node in according with the SP type. The hybrid header and payload are generated according to the SP type so that a receiving node that implements technology according to the SP type is able to demodulate the data packet that was generated by a transmitting node that implements technology according to the FP type. Therefore, nodes implemented according to diverse standards may coexist, operate and receive data on a common communication network medium.

At block 506, the data packet is transmitted by the node on the communication medium. In one implementation, the data packet is transmitted on the communication medium for reception by one or more nodes that are associated with the communication medium. In another Implementation, the data packet is transmitted to one or more particular nodes.

The order in which the process 500 described is not intended to be construed as a limitation, and any number of the described process blocks can be combined in any order to implement the processes, or alternate processes. Additionally, Individual blocks may be deleted from the processes without departing from the scope of the subject matter described herein. Furthermore, the processes can be implemented in any suitable hardware, software, firmware, or a combination thereof, without departing from the scope of the subject matter described herein.

In alternate implementations, other techniques may be included in the process 500 In various combinations, and remain within the scope of the disclosure.

Although the supplemental information is described as being conveyed a frame's preamble/header portion, this is by way of example only. Other implementations convey such supplemental information in a body, preamble, or header of a frame, or a combination of such portions of a frame.

In one implementation, the predetermined header information, which may be used by a node to generate a predetermined header for inclusion in a data frame, may be based on network noise levels observed by a controller node and/or other nodes, instructions from upper level management systems (e.g., user settings), information from neighboring networks or domains, and/or other information available in the system.

The above-described arrangements, apparatuses and methods may be implemented In a software module, a software and/or hardware testing module, a telecommunications test device, a DSL modem, an ADSL modem, an xDSL modem, a VDSL modem, a linecard, a G.hn transceiver, a MOCA transceiver, a Homeplug transceiver, a G3 transceiver, a G.hnem transcevier, a powerline modem, a wired or wireless modem, test equipment, a multicarrier transceiver, a wired and/or wireless wide/local area network system, a satellite communication system, network-based communication systems, such as an IP, Ethernet or ATM system, a modem equipped with diagnostic capabilities, or the like, or on a separate programmed general purpose computer having a communications device or in conjunction with any of the following communications protocols: CDSL, ADSL2, ADSL2+, VDSL1, VDSL2, HDSL, DSL Lite, IDSL, RADSL, SDSL, UDSL, MOCA, G.hn, Homeplug or the like.

Additionally, the arrangements, procedures and protocols of the described implementations may be implemented on a special purpose computer, a programmed microprocessor or microcontroller and peripheral integrated circuit element(s), an ASIC or other integrated circuit, a digital signal processor, a flashable device, a hard-wired electronic or logic circuit such as discrete element circuit, a programmable logic device such as PLD, PLA, FPGA, PAL, a modem, a transmitter/receiver, any comparable device, or the like. In general, any apparatus capable of implementing a state machine that is in turn capable of implementing the methodology described and illustrated herein may be used to implement the various communication methods, protocols and techniques according to the implementations.

Furthermore, the disclosed procedures may be readily implemented in software using object or object-oriented software development environments that provide portable source code that can be used on a variety of computer or workstation platforms. Alternatively, the disclosed arrangements may be implemented partially or fully in hardware using standard logic circuits or VLSI design. The communication arrangements, procedures and protocols described and illustrated herein may be readily implemented in hardware and/or software using any known or later developed systems or structures, devices and/or software by those of ordinary skill in the applicable art from the functional description provided herein and with a general basic knowledge of the computer and telecommunications arts.

Moreover, the disclosed procedures may be readily implemented in software that can be stored on a computer-readable storage medium (such as memory 208), executed on programmed general-purpose computer with the cooperation of a controller (such as controller 206) and memory 208, a special purpose computer, a microprocessor, or the like. In these instances, the arrangements and procedures of the described implementations may be implemented as program embedded on personal computer such as an applet, JAVA® or CGI script, as a resource residing on a server or computer workstation, as a routine embedded In a dedicated communication arrangement or arrangement component, or the like. The arrangements may also be implemented by physically incorporating the arrangements and/or procedures into a software and/or hardware system, such as the hardware and software systems of a test/modeling device.

Although the implementations of the disclosure have been described in language specific to structural features and/or methodological acts, it is to be understood that the implementations are not necessarily limited to the specific features or acts described. Rather, the specific features and acts are disclosed as representative forms of implementing the invention.

## Claims

1. A method for enabling communication between a transmitting node (104, 106, 108) implementing a G.hnem standard and a receiving node (104, 106, 108) implementing a G3 standard, the method being **characterized by** comprising:
generating, at the transmitting node (104, 106, 108), a frame (300; 400) including:
a preamble (330; 430) generated based on a first protocol type,
a first header (320; 420) generated based on the first protocol type,
a second header (440) generated based on a second protocol type, and
a payload (310; 410) generated based on the second protocol type; and
transmitting the frame (300; 400) to the receiving node (104, 106, 108),
wherein the first protocol type is according to standard G.hnem and the second protocol type is according to standard G3,
wherein the first header (320; 420) includes at least a first Frame Control Header generated according to the first protocol type, wherein the first Frame Control Header includes first frame configuration information indicative of a first modulation and coding scheme of the first protocol type, and
wherein the second header (440) includes at least a second Frame Control Header generated according to the second protocol type, wherein the second Frame Control Header includes second frame configuration information indicative of a second modulation and coding scheme of the second protocol type,
wherein the second Frame Control Header is truncated to remove redundant information common between the first Frame Control Header and the second Frame Control Header.

2. The method of claim 1, wherein one or more symbols are disposed between the first header and the second header.

3. The method of any of claims 1 or 2, wherein the first header (320; 420) includes a bit usable to determine that the frame (300; 400) includes payload (310; 410) that may be demodulated by a node operating according to the second protocol type.

4. A system (100), comprising:
a communication network medium (102); and
at least one transmitting node (104, 106, 108) implementing a G.hnem standard coupled to the medium,
a receiving node (104, 106, 108) implementing a G3 standard coupled to the medium, the transmitting node arranged to communicate, to the receiving node, at least in part via the medium, a frame (300) that includes
a preamble (330; 430) generated based on a first protocol type,
a first header (320) generated based on the first protocol type,
a second header (440) generated based on a second protocol type, and
a payload (310) generated based on the second protocol type,
wherein the first protocol type is according to standard G.hnem and the second protocol type is according to standard G3,
wherein the first header (320; 420) includes at least a first Frame Control Header generated according to the first protocol type, wherein the first Frame Control Header includes first frame configuration information indicative of a first modulation and coding scheme of the first protocol type and
wherein the second header (440) includes at least a second Frame Control Header generated according to the second protocol type, wherein the second Frame Control Header includes second frame configuration information indicative of a second modulation and coding scheme of the second protocol type,
wherein the second Frame Control Header is truncated to remove redundant information common between the first Frame Control Header and the second Frame Control Header.

5. The system of claim 4, wherein the communication network medium (102) comprises a network of electrical power distribution conductors.

6. The system of any of claims 4 or 5, the system being adapted to perform the method of any of claims 1 to 3.

## Patentansprüche

1. Verfahren zum Ermöglichen von Kommunikation zwischen einem Sendeknoten (104, 106, 108), der eine G.hnem-Norm implementiert, und einem Empfangsknoten (104, 106, 108), der eine G3-Norm implementiert, wobei das Verfahren **dadurch gekennzeichnet ist, dass** es Folgendes umfasst:
Erzeugen eines Rahmens (300; 400) an dem Sendeknoten (104, 106, 108), der Folgendes enthält:
eine Präambel (330; 430), die auf der Grundlage eines ersten Protokolltyps erzeugt wird,
einen ersten Datenkopf (320; 420), der auf der Grundlage des ersten Protokolltyps erzeugt wird,
einen zweiten Datenkopf (440), der auf der Grundlage eines zweiten Protokolltyps erzeugt wird, und
Nutzdaten (310; 410), die auf der Grundlage des zweiten Protokolltyps erzeugt werden, und
Senden des Rahmens (300; 400) an den Empfangsknoten (104, 106, 108),
wobei der erste Protokolltyp mit der G.hnem-Norm konform ist und der zweite Protokolltyp mit der G3-Norm konform ist,
wobei der erste Datenkopf (320; 420) mindestens einen ersten Rahmensteuerdatenkopf, der gemäß dem ersten Protokolltyp erzeugt wird, enthält, wobei der erste Rahmensteuerdatenkopf erste Rahmenkonfigurationsinformationen enthält, die ein erstes Modulations- und Codierschema des ersten Protokolltyps enthalten, und
wobei der zweite Datenkopf (440) mindestens einen zweiten Rahmensteuerdatenkopf, der gemäß dem zweiten Protokolltyp erzeugt wird, enthält, wobei der zweite Rahmensteuerdatenkopf zweite Rahmenkonfigurationsinformationen enthält, die ein zweites Modulations- und Codierschema des zweiten Protokolltyps enthalten,
wobei der zweite Rahmensteuerdatenkopf gekürzt ist, um redundante Informationen zu entfernen, die dem ersten Rahmensteuerdatenkopf und dem zweiten Rahmensteuerdatenkopf gemeinsam sind.

2. Verfahren nach Anspruch 1, wobei zwischen dem ersten Datenkopf und dem zweiten Datenkopf ein oder mehrere Symbole angeordnet sind.

3. Verfahren nach einem der Ansprüche 1 oder 2, wobei der erste Datenkopf (320; 420) ein Bit enthält, das verwendet werden kann, um zu bestimmen, dass der Rahmen (300; 400) Nutzdaten (310; 410) enthält, die durch einen Knoten demoduliert werden können, der gemäß dem zweiten Protokolltyp arbeitet.

4. System (100), das Folgendes umfasst:
ein Kommunikationsnetzmedium (102) und
mindestens einen Sendeknoten (104, 106, 108), der eine G.hnem-Norm implementiert, der an das Medium gekoppelt ist,
einen Empfangsknoten (104, 106, 108), der eine G3-Norm implementiert, der an das Medium gekoppelt ist,
wobei der Sendeknoten eingerichtet ist, um zumindest zum Teil über das Medium mit dem Empfangsknoten zu kommunizieren,
einen Rahmen (300), der Folgendes enthält:
eine Präambel (330; 430), die auf der Grundlage eines ersten Protokolltyps erzeugt wird,
einen ersten Datenkopf (320), der auf der Grundlage des ersten Protokolltyps erzeugt wird,
einen zweiten Datenkopf (440), der auf der Grundlage eines zweiten Protokolltyps erzeugt wird, und
Nutzdaten (310), die auf der Grundlage des zweiten Protokolltyps erzeugt werden,
wobei der erste Protokolltyp mit der G.hnem-Norm konform ist und der zweite Protokolltyp mit der G3-Norm konform ist,
wobei der erste Datenkopf (320; 420) mindestens einen ersten Rahmensteuerdatenkopf, der gemäß dem ersten Protokolltyp erzeugt wird, enthält, wobei der erste Rahmensteuerdatenkopf erste Rahmenkonfigurationsinformationen enthält, die ein erstes Modulations- und Codierschema des ersten Protokolltyps enthalten, und
wobei der zweite Datenkopf (440) mindestens einen zweiten Rahmensteuerdatenkopf, der gemäß dem zweiten Protokolltyp erzeugt wird, enthält, wobei der zweite Rahmensteuerdatenkopf zweite Rahmenkonfigurationsinformationen enthält, die ein zweites Modulations- und Codierschema des zweiten Protokolltyps enthalten,
wobei der zweite Rahmensteuerdatenkopf gekürzt ist, um redundante Informationen zu entfernen, die dem ersten Rahmensteuerdatenkopf und dem zweiten Rahmensteuerdatenkopf gemeinsam sind.

5. System nach Anspruch 4, wobei das Kommunikationsnetzmedium (102) ein Netz von Verteilungsleitern elektrischer Leistung umfasst.

6. System nach einem der Ansprüche 4 oder 5, wobei das System dafür ausgelegt ist, das Verfahren nach einem der Ansprüche 1 bis 3 durchzuführen.

## Revendications

1. Procédé pour permettre la communication entre un nœud de transmission (104, 106, 108) mettant en œuvre une norme G.hnem et un nœud de réception (104, 106, 108) mettant en œuvre une norme G3, le procédé étant **caractérisé en ce qu'**il comprend les étapes suivantes :
générer, au niveau du nœud de transmission (104, 106, 108), une trame (300 ; 400) comprenant :
un préambule (330 ; 430) généré sur la base d'un premier type de protocole,
un premier en-tête (320 ; 420) généré sur la base du premier type de protocole,
un second en-tête (440) généré sur la base d'un second type de protocole, et
une charge utile (310 ; 410) générée sur la base du second type de protocole ; et
transmettre la trame (300 ; 400) au nœud de réception (104, 106, 108),
où le premier type de protocole est conforme à la norme G.hnem et le second type de protocole est conforme à la norme G3,
où le premier en-tête (320 ; 420) comprend au moins un premier en-tête de contrôle de trame généré selon le premier type de protocole, où le premier en-tête de contrôle de trame comprend des premières informations de configuration de trame indicatives d'un premier schéma de modulation et de codage du premier type de protocole, et
où le second en-tête (440) comprend au moins un second en-tête de contrôle de trame généré selon le second type de protocole, où le second en-tête de contrôle de trame comprend des secondes informations de configuration de trame indicatives d'un second schéma de modulation et de codage du second type de protocole,
où le second en-tête de contrôle de trame est tronqué pour supprimer les informations redondantes communes entre le premier en-tête de contrôle de trame et le second en-tête de contrôle de trame.

2. Procédé selon la revendication 1, dans lequel un ou plusieurs symboles sont disposés entre le premier en-tête et le second en-tête.

3. Procédé selon l'une quelconque des revendications 1 ou 2, dans lequel le premier en-tête (320 ; 420) comprend un bit utilisable pour déterminer que la trame (300 ; 400) comprend une charge utile (310 ; 410) qui peut être démodulée par un nœud fonctionnant selon le second type de protocole.

4. Système (100), comprenant :
un support de réseau de communication (102) ; et
au moins un nœud de transmission (104, 106, 108) mettant en œuvre une norme G.hnem couplé au support,
un nœud de réception (104, 106, 108) mettant en œuvre une norme G3 couplé au support, le nœud de transmission étant agencé pour communiquer, au nœud de réception, au moins en partie par l'intermédiaire du support, une trame (300) qui comprend
un préambule (330 ; 430) généré sur la base d'un premier type de protocole,
un premier en-tête (320) généré sur la base du premier type de protocole,
un second en-tête (440) généré sur la base d'un second type de protocole, et
une charge utile (310) générée sur la base du second type de protocole, où le premier type de protocole est conforme à la norme G.hnem et le second type de protocole est conforme à la norme G3,
où le premier en-tête (320 ; 420) comprend au moins un premier en-tête de contrôle de trame généré selon le premier type de protocole, où le premier en-tête de contrôle de trame comprend des premières informations de configuration de trame indicatives d'un premier schéma de modulation et de codage du premier type de protocole, et
où le second en-tête (440) comprend au moins un second en-tête de contrôle de trame généré selon le second type de protocole, où le second en-tête de contrôle de trame comprend des secondes informations de configuration de trame indicatives d'un second schéma de modulation et de codage du second type de protocole,
où le second en-tête de contrôle de trame est tronqué pour supprimer les informations redondantes communes entre le premier en-tête de contrôle de trame et le second en-tête de contrôle de trame.

5. Système selon la revendication 4, dans lequel le support de réseau de communication (102) comprend un réseau de conducteurs de distribution de courant électrique.

6. Système selon l'une quelconque des revendications 4 ou 5, le système étant adapté pour exécuter le procédé de l'une quelconque des revendications 1 à 3.
